# EUROPÄISCHE PATENTSCHRIFT

(11) **EP 2 180 230 B1**
(45) Veröffentlichungstag und Bekanntmachung des Hinweises auf die Patenterteilung: **10.04.2013**
(21) Anmeldenummer: 09010082.7
(22) Anmeldetag: 05.08.2009
(51) Int. Cl.: F16M 7/00

(54) **Nivellierschuh**
Levelling shoe
Sabot de nivellement

(30) Priorität: 23.10.2008 DE 102008052849; 13.11.2008 DE 102008057304
(43) Veröffentlichungstag der Anmeldung: 28.04.2010
(73) Patentinhaber: Isoloc Schwingungstechnik GmbH, 70499 Stuttgart (DE)
(72) Erfinder: Güney, Süleyman, Dr.-Ing., 70499 Stuttgart (DE)
(74) Vertreter: Fleck, Hermann-Josef

(56) Entgegenhaltungen:
- EP-A1- 0 037 473
- CH-A5- 678 451
- DE-A1-102005 062 194
- DE-C2- 4 429 813
- US-H1- H2 009

## Beschreibung

Die Erfindung bezieht sich auf einen Nivellierschuh mit einem an einem Maschinenbett mittels einer Schraubbefestigung anbringbaren Oberteil, einem auf einer Unterlage aufsetzbaren Unterteil und einem zwischen diesen zum Ändern ihres Abstandes über Keilflächen horizontal verschieblich gelagerten Stellkeil, der mittels einer in ihm drehbar und axial unverstellbar gelagerten Nivellierspindel horizontal vor und zurück verschiebbar ist, welche durch ein einerseits in das Unterteil und andererseits in das Oberteil eingreifendes, gegenüber diesen in senkrechter Richtung frei verschiebliches und in Achsrichtung der Nivellierspindel unverschiebliches Verankerungsteil geschraubt ist, wobei das Verankerungsteil als Ankerbolzen ausgebildet ist, der mit seiner Achse senkrecht zur Achse der Nivellierspindel ausgerichtet ist.

Ein Nivellierschuh dieser Art ist in der CH 678 451 A5 angegeben. Bei diesem bekannten Nivellierschuh ist an einer Kopfplatte eine Büchse aus Kunststoff angeformt, in die ein metallischer Kern eingesetzt ist, der bei umgedrehter Kopfplatte etwa mit deren Unterseite bündig ist. Der Kern hat eine mit einer Durchgangsbohrung der Büchse fluchtende Gewindebohrung, in die eine Schraubspindel zum Verstellen eines zwischen der Kopfplatte und einer Fußplatte eingesetzten Keils für eine Höhenverstellung einschraubbar ist. Die im Bereich der Kopfplatte liegende Stirnfläche kann mit einem axial im Kern liegenden Innengewinde versehen sein, um mittels einer Schraube den Nivellierschuh an einer darauf stehenden Maschine zu befestigen.

Nivellierschuhe mit Grundplatte und Kopfplatte und dazwischen zur Höhenverstellung mittels einer Spindel verstellbarem Stellkeil sind auch in der EP 0 037 473 und der US H 2009 H1 gezeigt.

In der DE 10 2005 062 194 A1 ist ein pendelnd an der Unterseite einer Maschine anbringbarer Nivellierteller gezeigt.

Ein weiterer Nivellierschuh ist in der DE 44 29 813 C2 angegeben. Dieser bekannte Nivellierschuh umfasst eine Grundplatte und eine Deckplatte, zwischen denen ein mittels einer Nivellierspindel horizontal verschiebbarer Stellkeil gelagert ist, um den Abstand zwischen Grundplatte und Deckplatte in Höhenrichtung zu ändern und damit einen Höhenausgleich zum Abstützen einer auf der Oberseite der Deckplatte gelagerten Maschine zu bewirken. Dabei kann auf der Oberseite der Deckplatte auch eine kugelige Ausnehmung zum Einsetzen eines komplementären Distanzstückes für einen Schrägenausgleich angeordnet sein. Auch können die Grundplatte und die Deckplatte seitlich neben der Nivellierspindel mit Bohrungen für Befestigungsschrauben oder Zuganker versehen sein, um den Nivellierschuh mit der abgestützten Maschine am Boden zu verankern oder die Grundplatte kann mit zwei Gewindebohrungen und die Deckplatte mit zwei Durchgangsbohrungen ausgestattet werden, um die Maschinenschuhe an den Maschinenfüßen anschrauben zu können, nachdem der Nivellierschuh auf die gewünschte Höhe eingestellt ist. Ein Nivellierschuh dieses Aufbaus, der von der Anmelderin unter der Typbezeichnung UMS-DSF, UMS-ASF sowie UMS-ASA angeboten wird, ist mit einer seitlich neben der Nivellierspindel außermittig angeordneten Befestigungsschraube versehen, um den Nivellierschuh mit einem Maschinenbett zu verbinden. Wie sich herausgestellt hat, kann die Anbringung und Funktion des Nivellierschuhs bzw. Maschinenschuhs bei der Anwendung erschwert sein.

Die bisherigen Maschinenschuhe, insbesondere UMS-ASF und UMS-ASA mit Schrägenausgleich, werden am Maschinenbett festgeschraubt, während das Maschinenbett am Kran hängt. Nach dem Absetzen kann der Schrägenausgleich mit den Kugelkalotten einen beim Anschrauben entstandenen Winkelfehler nicht mehr ausgleichen. Es ist häufig ein mehrmaliges Anheben an den jeweiligen Auflagepunkten erforderlich, um die Maschinenschuhe auszurichten, da der Maschinenschuh nicht nivelliert werden darf, wenn er an einem Fuß angeschraubt ist. Man muss die Anschraubung lösen, nivellieren und dann wieder herstellen. Derartige Probleme bei außermittigen Durchgangslöchern an der Kopfplatte bzw. bei außermittiger Anschraubung eines Maschinenschuhs, bei dem die Nivellierspindel mittig in dem Nivellierschuh durch einen Verankerungsbolzen verläuft, treten immer wieder auf, wie z. B. eine Verkantung des Distanzstückes in der Kugelkalotte oder eine Selbsthemmung wegen einer relativ harten Verschraubung.

Der Erfindung liegt die Aufgabe zugrunde, einen Nivellierschuh bereit zu stellen, der eine verbesserte Anbringung und Funktion ergibt.

Diese Aufgabe wird mit den Merkmalen des Anspruches 1 gelöst. Hierbei ist vorgesehen, dass die Schraubbefestigung bezüglich der horizontalen Richtung rechtwinklig zur Nivellierspindel bezüglich der Querrichtung mittig auf dem Oberteil angeordnet ist.

Durch diese Ausbildung des Nivellierschuhs mit der mittigen Anordnung der Schraubbefestigung auf dem Nivellierschuh bezüglich der Querrichtung der Nivellierspindel, d. h. in einer senkrechten Mittelängsebene des Nivellierschuhs, ergibt sich eine verkantungsfreie Anbringung, die zu einer vereinfachten Justierung und Funktion führt.

Eine für den Aufbau und die Montage vorteilhafte Ausgestaltung besteht darin, dass die Schraubbefestigung eine Befestigungsschraube umfasst, die oberhalb des Verankerungsteils gelagert ist.

Eine für den Aufbau und die Funktion weitere vorteilhafte Ausgestaltung besteht darin, dass das Verankerungsteil als Ankerbolzen ausgebildet ist, der mit seiner Achse in Höhenrichtung des Nivellierschuhs senkrecht zur Achse der Nivellierspindel ausgerichtet ist.

Die Funktion wird weiterhin dadurch begünstigt, dass das Verankerungsteil in einer koaxialen Führungshülse verschieblich gehalten ist, die auf sich diametral gegenüberliegenden Seiten mit einer jeweiligen Spindeldurchführung versehen ist, welche gegenüber der Nivellierspindel nach oben und unten mindestens über den Verschiebeweg des Verankerungsteils ausgespart ist, und dass die Führungshülse mit ihrem oberen Endbereich in dem Oberteil und mit ihrem unteren Endbereich in dem Unterteil gelagert ist, wobei das Oberteil gegenüber dem Unterteil zum Ändern des Abstandes verschiebbar ist.

Zu einem stabilen Aufbau und einer zuverlässigen Funktion tragen ferner die Maßnahmen bei, dass die Führungshülse an einem Fußabschnitt mittels eines integrierten bundartigen oder separaten Sicherungsrings an dem Unterteil gehalten ist.

Die Funktionsweise und die Montage werden auch dadurch begünstigt, dass die Führungshülse auf ihrer Oberseite mit einem integrierten oder separaten Hülsendeckel versehen ist, an dem die Befestigungsschraube pendelnd gelagert ist.

Ein wesentlicher Vorteil ist, dass der Schuh, gemäß dieser Erfindung, im angehängten Zustand zusammengehalten bleibt und zwar über die Führungshülse, die ein konstruktiver Teil des Nivellierfußes ist. Bei bisherigen Lösungen wird der Zusammenhalt eines Schuhes nur mit zusätzlichen Einrichtungen und entsprechendem Aufwand ermöglicht. Dabei wird z. B. der Bolzen nachträglich gekürzt und Senklöcher werden an der Grund- und Kopfplatte eingearbeitet, in der zusätzliche Scheiben mit einem gewissen Spiel platziert werden. Dadurch wird aber der Nivellierbereich reduziert und die Kosten werden erhöht.

Eine weitere vorteilhafte Ausgestaltung besteht darin, dass die Befestigungsschraube in dem oberen Abschnitt des Verankerungsteils gelagert ist. Damit wird die Nivellierung nach der Anschraubung möglich; dies ist bei üblichen herkömmlichen Ausführungen nicht möglich.

Mit den Maßnahmen, dass die Oberseite des Oberteils mit einem Stützabschnitt versehen ist, der die Stelle der Schraubbefestigung ringförmig konzentrisch umgibt und auf seiner Oberseite entsprechend einer Kugelfläche konkav geformt ist, und dass ein Lagerring vorhanden ist, der auf seiner Unterseite zum Bilden einer Gleitlagerung eine an die konkave Kugelfläche des Stützabschnittes angepasste, nach unten konvexe Kugelfläche aufweist, wird ein vorteilhafter Schrägausgleich erreicht.

Weiterhin tragen zu einem vorteilhaften Aufbau mit sicherer Funktion die Maßnahmen bei, dass der Stellkeil zwei parallel zu der Nivellierspindel verlaufende Seitenabschnitte, einen diese an der rückseitigen Keilseite verbindenden hohen Quersteg sowie einen diese an der vorderseitigen Keilseite verbindenden niedrigen Quersteg aufweist und dass die Keilflächen zumindest an den Seitenabschnitten ausgebildet sind und mit angepassten Führungsabschnitten an der Oberseite des Unterteils und an der Unterseite des Oberteils zum Bilden einer Gleitlagerung zusammenwirken.

Die Handhabung und Funktion werden ferner dadurch begünstigt, dass die Nivellierspindel mit ihrem vorderen Abschnitt in dem niedrigen Quersteg und mit ihrem hinteren Abschnitt in dem hohen Quersteg drehbar, aber axial unverschieblich gelagert ist und an ihrem hinteren Abschnitt mit einem Spindelkopf mit Werkzeugaufnahme zum Drehen der Nivellierspindel versehen ist.

Die Erfindung wird nachfolgend anhand von Ausführungsbeispielen unter Bezugnahme auf die Zeichnungen näher erläutert. Es zeigen:
- Fig. 1: einen Nivellierschuh mit Stellkeil für einen Höhenausgleich und einer Schrägausgleichvorrichtung in perspektivischer Ansicht,
- Fig. 2: den Nivellierschuh nach Fig. 1 in Draufsicht bei weiter eingeschobenem Stellkeil,
- Fig. 3: den Nivellierschuh nach Fig. 2, der nicht Teil der Erfindung ist, in einem Längsschnitt im Bereich einer Stellspindel und eines Verankerungsteils,
- Fig. 4: einen Querschnitt des Nivellierschuhs, der nicht Teil der Erfindung ist, im Bereich des Verankerungs- teils,
- Fig. 5A: ein weiteres Ausführungsbeispiel des Nivellierschuhs im Längsschnitt mit einer abgewandelten Führungshülse des Verankerungsteils,
- Fig. 5B und 5C: den Nivellierschuh nach Fig. 5A bei weggelassenem Oberteil und in teilweise auseinander genommener Darstellung teilweise im Quer- schnitt bzw. in Draufsicht,
- Fig. 6A und 6B: eine Führungshülse, die nicht Teil der Erfindung ist, teilweise im Querschnitt bzw. in perspektivischer Ansicht,
- Fig. 7A und 7B: ein weiteres Beispiel für eine Führungshülse, die nicht Teil der Erfindung ist, teilweise im Querschnitt bzw. in perspektivischer Ansicht,
- Fig. 8A: ein Ausführungsbeispiel eines Nivellierschuhs in Seitenan- sicht, teilweise geschnitten,
- Fig. 8B: ein Ausführungsbeispiel für einen Nivellierschuh, teilweise im Längsschnitt und
- Fig. 9: einen Ankerbolzen mit Befestigungsschraube in teilweise geschnittener Seitenansicht und in einem Querschnitt.

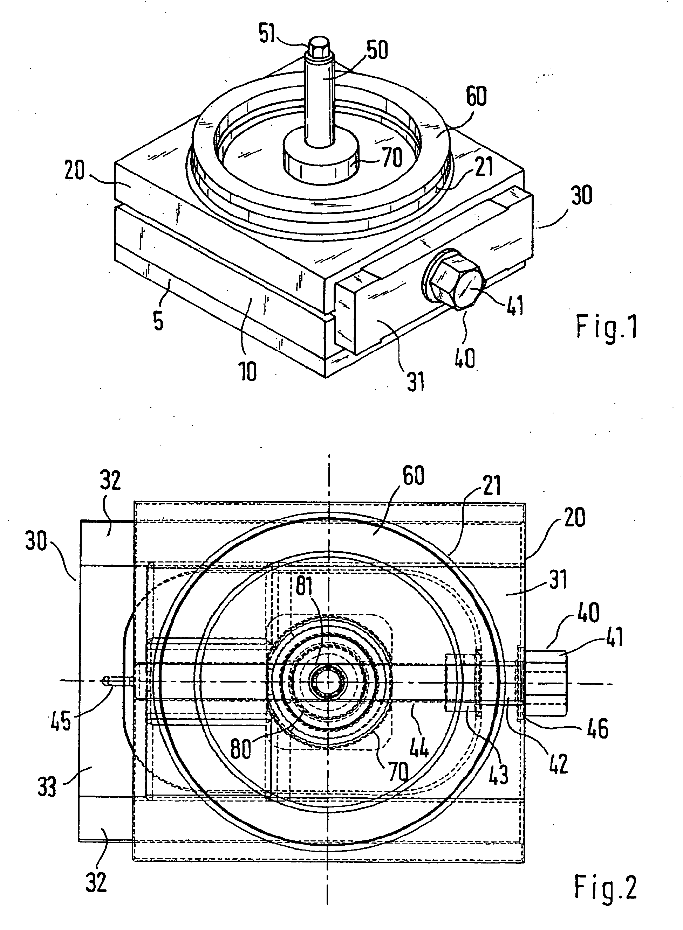

Fig. 1 zeigt einen Nivellierschuh zum Abstützen schwerer Gegenstände, insbesondere Maschinen, auf einer Unterlage mit einem Ausrichtmechanismus für einen Höhenausgleich und für einen Schrägenausgleich. Wesentliche Teile des Nivellierfußes sind ein plattenförmiges Unterteil 10 (Grundplatte), ein Oberteil 20 (Kopfplatte) und ein dazwischen angeordneter Stellkeil 30, der mittels einer Nivellierspindel 40 mehr oder weniger weit zwischen dem Unterteil 10 und dem Oberteil 20 horizontal einschiebbar ist. Der Stellkeil 30 steht bei der gezeigten Einstellung mit einem hohen Quersteg 31 etwas über die betreffende Schmalseite des Unterteils 10 und des Oberteils 20 vor und kann durch Betätigung der Stellspindel 40 an einem Spindelkopf 41 eingeschoben oder noch weiter herausgeschoben werden, wobei sich der Abstand des Unterteils 10 gegenüber dem Oberteil 20 in Höhenrichtung entsprechend der Keilschräge ändert. Die Spindel ist an beiden Enden drehbar gelagert. Die Unterseite des Unterteils 10 ist mit einem plattenförmigen Schwingungsisolator 5 versehen, um eine Schwingungsübertragung zwischen der Maschine und dem Untergrund zu reduzieren. Auf der Oberseite des Oberteils 20 ist eine Schrägausgleichvorrichtung mit einem kreisringförmigen Stützabschnitt 21 und einem darauf aufgelegten Lagerring 60 angeordnet, wobei die Kopfplatte 20 und der Stützabschnitt 21, ausgebildet als Kalotte oder Teil-Kalotte, eine Führungshülse 70 mit darin mittig gelagerter Befestigungsschraube 50, die mit einem Schraubenkopf 51 versehen ist, konzentrisch umgibt. Auf der z. B. flachen Oberseite des Lagerrings 60 wird der zu stützende Gegenstand, insbesondere eine Maschine mit ihrem Maschinenbett aufgesetzt.

Alternativ kann die Stützfläche des Stützabschnittes 21 auch eben ausgestaltet sein, ebenso wie auch die zugekehrte Lagerfläche des Lagerrings 60, wobei dann kein Schrägenausgleich erfolgt.

Fig. 2 zeigt eine Draufsicht des Nivellierfußes nach Fig. 1 mit weiter eingeschobenem Stellkeil 30, an dessen von dem hohen Quersteg 31 abgekehrtem niedrigen Endbereich ein niedriger Quersteg 33 angeordnet ist, der in der gezeigten Darstellung über die benachbarte Seite des Unterteils 10 und des Oberteils 20 vorsteht. Zwischen dem hohen Quersteg 31 und dem niedrigen Quersteg 33 erstrecken sich beidseitig parallel zu der Achse der Nivellierspindel 40 und damit auch parallel zur Verschieberichtung des Stellkeils 30 Seitenabschnitte 32, die mit Keilschrägen versehen sind.

Zwischen den Seitenabschnitten 32, dem hohen Quersteg 31 und dem niedrigen Quersteg 33 ist eine Aussparung des Stellkeils 30 gebildet, durch die sich die Führungshülse 70 in Höhenrichtung des Nivellierschuhs bzw. senkrechter Richtung nach oben/unten erstreckt. Die Nivellierspindel 40 ist in ihrem zum Spindelkopf 41 gerichteten Abschnitt in einer Bohrung des hohen Querstegs 31 drehbar gelagert und mittels des Spindelkopfes 41 nach außen hin und eines Sicherungselementes, insbesondere einer Sicherungsmutter 43, nach innen hin axial im Wesentlichen (höchstens um ein geringes Spiel zum einfachen Drehen) unverschieblich gehalten. Auch der von dem Spindelkopf 41 abgekehrte Endabschnitt der Nivellierspindel 40 ist in dem Stellkeil 30, nämlich einem in dem niedrigen Quersteg 33 ausgebildeten Drehlager drehbar aufgenommen, während der zwischen den Lagerstellen sich erstreckende, mit einem Schraubgewinde versehene Spindelschaft 44 die Führungshülse 70 und ein darin senkrecht bewegbar gehaltenes, als Ankerbolzen ausgebildetes Verankerungsteil 80 durchsetzt, wobei in dem Verankerungsteil 80 eine mit dem Gewinde des Spindelschaftes 44 zusammenwirkende Gewindebohrung 81 ausgebildet ist. Die Führungshülse 70 und damit auch das Verankerungsteil 80 in Form des Ankerbolzens sind damit zwar senkrecht hin und her bewegbar in dem Unterteil 10 und dem Oberteil 20 gehalten, jedoch nicht in Richtung der Achse der Nivellierspindel 40 verschiebbar, so dass durch Drehen der mit ihrem Lagerabschnitt 42 in dem hohen Quersteg 31 und mit ihrem Spindelfuß 45 in dem niedrigen Quersteg 33 drehbar gelagerten Nivellierspindel der Stellkeil 30 in horizontaler Richtung bzw. in Keilrichtung relativ zu dem Unterteil 10 und Oberteil 20 hin und her verschiebbar ist, um den Abstand zwischen dem Unterteil 10 und dem Oberteil 20 zu variieren und damit die Höhe des Nivellierfußes zu justieren. Zwischen dem Spindelkopf 41 und der angrenzenden Fläche des hohen Querstegs 31 ist eine Scheibe 46 eingelegt, wodurch die Drehbarkeit der Nivellierspindel 40 verbessert wird. Eine entsprechende Scheibe kann auch zwischen dem hohen Quersteg 31 und dem Sicherungselement 43 eingefügt sein.

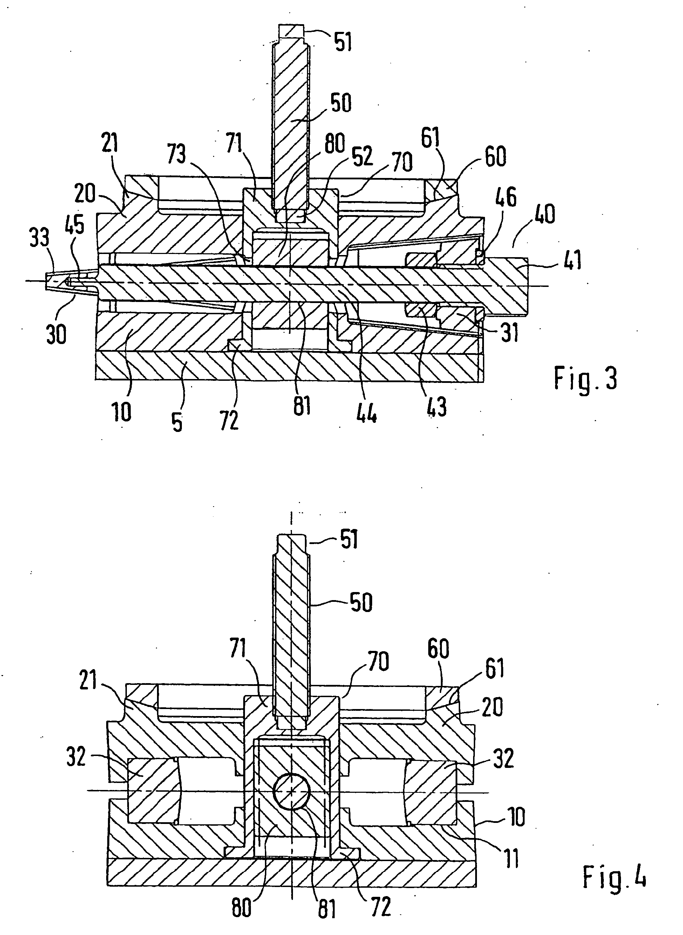

In dem in Fig. 3 dargestellten Längsschnitt des Nivellierfußes entlang der Nivellierspindel 40 sind die vorstehend beschriebenen Elemente ebenfalls gezeigt und zudem die Führungshülse 70 mit dem darin angeordneten Verankerungsteil 80 in Form des Ankerbolzens sowie der Schrägausgleichmechanismus mit dem Stützabschnitt 21 und dem Lagerring 60 näher dargestellt. Die Führungshülse 70 ist mit einem bundartigen umlaufenden Sicherungsring 72 versehen, der im Bereich des Fußabschnittes nach außen vorragt und in eine angepasste Aussparung des Unterteils 10 eingreift und somit gegen ein Herausschieben aus dem Unterteil 10 nach oben gesichert ist. Dies geht auch aus dem in Fig. 4 gezeigten Querschnitt des Nivellierschuhs hervor. Das Verankerungsteil 80 ist im Inneren der Führungshülse 70 nach oben und unten beweglich gelagert, um die Veränderung des Abstandes zwischen Unterteil 10 und Oberteil 20 und damit die Höhenverstellung ungehindert zuzulassen, wobei auch das Oberteil 20 gegenüber der Führungshülse 70 nach oben und unten verschiebbar ist. Um eine relative Bewegung zwischen Führungshülse 70 und Verankerungsteil 80 nach oben und unten zuzulassen, sind die beiderseitigen Spindeldurchführungen 73 der Führungshülse 70 nach oben und unten mindestens um den möglichen Bewegungsweg der Nivellierungsspindel 40 relativ zu der Führungshülse 70 ausgespart.

Ferner ist die Führungshülse 70 in ihrem oberen Abschnitt mit einem Hülsendeckel 71 versehen, der bei dem gezeigten Ausführungsbeispiel, der nicht Teil der Erfindung ist, an der Führungshülse 70 einstückig angebracht ist. In dem Hülsendeckel 71 ist die Befestigungsschraube 50 mit ihrem Schraubenfuß 52 gelagert, wie aus Fig. 4 ebenfalls ersichtlich.

Der auf der Oberseite des Oberteils 20 angeordnete, ringförmig umlaufende Stützabschnitt 21 weist auf seiner Oberseite eine kugelkalottenförmige ringförmige, konkave Auflagefläche auf, auf die der Lagerring 60 mit einer komplementären kugelkalottenförmigen ringförmigen konvexen Auflagefläche zum Bilden einer Gleitlagerung aufgelegt ist, um einen Schrägausgleich zwischen Unterlage und Maschinenbett zu ermöglichen. Diese Ausbildung des Stützabschnittes 21 und des Kugelflächenabschnittes 61 ist den Fig. 3 und 4 ebenfalls entnehmbar. Auch zeigen die Fig. 3 und 4, dass der Stützabschnitt 21 die Führungshülse 70 und die Befestigungsschraube 50 konzentrisch umgibt.

Wie insbesondere aus Fig. 4 ersichtlich, sind die Seitenabschnitte 32 des Stellkeils 30 auf ihrer oberen Keilfläche an unteren Führungsabschnitten des Oberteils 20 einerseits und oberen Führungsabschnitten 11 des Unterteils 10 andererseits leitend gelagert und von seitlichen Begrenzungsabschnitten auf der Außenseite des Unterteils 10 und des Oberteils 20 übergriffen, so dass sich eine eindeutige Führung des Stellkeils 30 zwischen dem Unterteil 10 und dem Oberteil 20 ergibt.

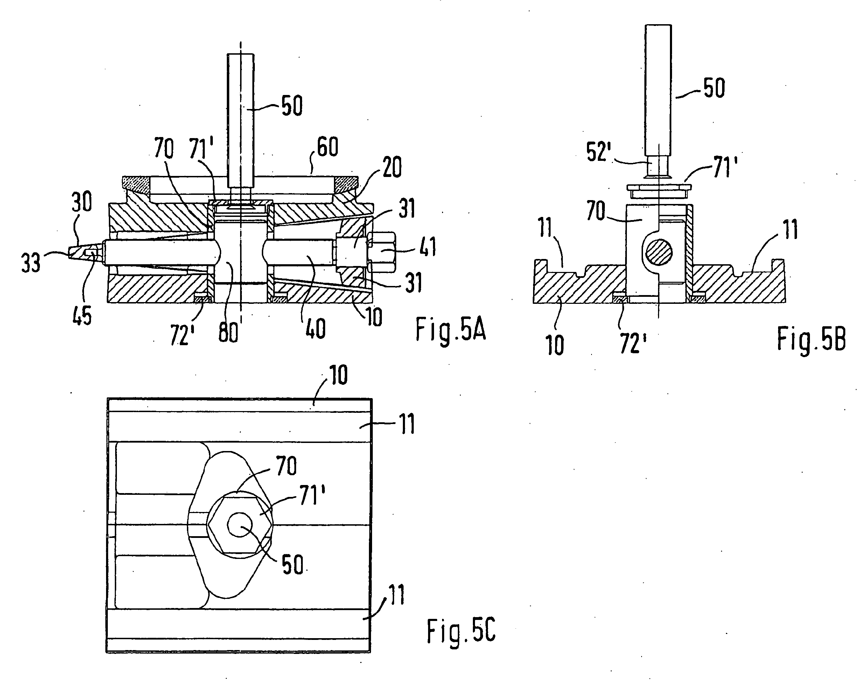

In Fig. 5A ist ein weiteres Ausführungsbeispiel eines Nivellierschuhs mit einer Führungshülse 70 und einem darin in senkrechter Richtung bzw. Höhenrichtung vertikal verschiebbar, axial bezüglich der Nivellierspindel 40 jedoch unverschiebbar aufgenommenen Verankerungsteil 80 gezeigt. Hierbei ist die Führungshülse 70 mit einem separat aufgebrachten Hülsendeckel 71' und der Hülsenfuß mit einem separat aufgebrachten, beispielsweise aufgeschraubten, Sicherungsring 72' versehen, wobei die Aussparung in dem Unterteil 10 um den Sicherungsring 72' in Höhenrichtung einen kleinen Freiraum für etwas Bewegungsspiel der Führungshülse 70 in Höhenrichtung lässt. Wie auch aus Fig. 5B ersichtlich, die einen teilweisen Querschnitt des Ausführungsbeispiels nach Fig. 5A bei weggelassenem Oberteil zeigt, ist die Befestigungsschraube 50 mit ihrem Schraubenfuß 52' in dem Hülsendeckel 71' mit Bewegungsspiel gelagert, so dass eine Pendelbewegung für ein verkantungsfreies Anbringen des Nivellierfußes mittels der Befestigungsschraube 50 an dem Maschinenbett ermöglicht wird. Auch zeigt Fig. 5B den Querschnitt der Führungsabschnitte 11 in dem Unterteil 10 genauer, wobei die Führungsabschnitte 11 in der Führungsfläche eine Längsnut und auf ihrer Innenseite zur Nivellierspindel 40 hin einen seitlichen, nach oben gerichteten Begrenzungsabsatz des Führungsabschnittes 11 aufweisen, womit eine eindeutige Führung des Stellkeils 30 begünstigt wird. Fig. 5C zeigt das Unterteil 10 des in den Fig. 5A und 5B gezeigten Nivellierfußes in Draufsicht mit den beiden seitlichen Führungsabschnitten 11 und der bezüglich der Querrichtung mittig angeordneten Führungshülse 70 mit aufgeschraubtem Hülsendeckel 71' und Befestigungsschraube 50.

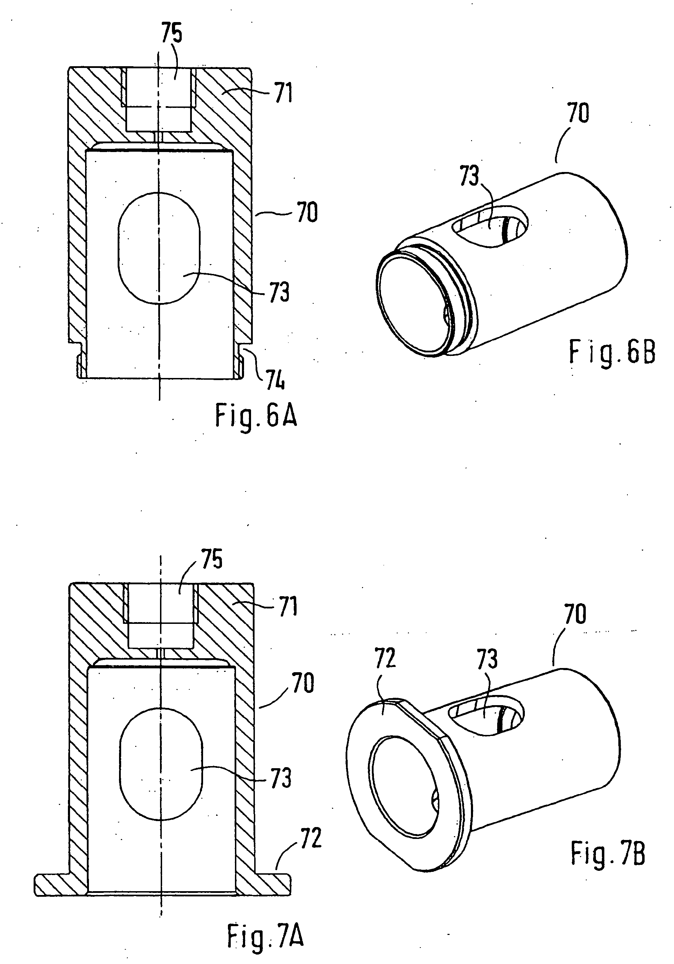

In Fig. 6A ist die mit einem separat aufbringbaren Sicherungsring ausgebildete Führungshülse 70, der nicht Teil der Erfindung ist, im Längsschnitt gezeigt, wobei die nach oben und unten erweiterte Spindeldurchführung 73 ersichtlich ist und auch eine Schraubenfußaufnahme 75 sowie eine umlaufende Sicherungsringnut bzw. ein Außengewinde 74, um den Sicherungsring anzuschrauben, im unteren Hülsenabschnitt dargestellt sind. Fig. 6B zeigt die Führungshülse nach Fig. 6A in perspektivischer Ansicht. Die Länge der beiden langlochförmigen Spindeldurchführungen 73 ist größer als der gesamte Nivellierweg, so dass die Nivellierung dadurch ungehindert möglich ist.

Fig. 7A zeigt die einstückig mit dem integrierten Sicherungsring 72 ausgebildete Führungshülse 70, der nicht Teil der Erfindung ist, im Querschnitt, während Fig. 7B diese Ausführungsform der Führungshülse 70 in perspektivischer Ansicht wiedergibt. Der Sicherungsring 72 besitzt zwei gerade ausgebildete Kanten 72.1 und ist dadurch nicht drehbar, so dass verhindert wird, dass die Führungshülse 70 die Nivellierspindel 40', insbesondere deren Gewinde, beschädigt. Auch hierbei sind die Spindeldurchführungen 73 ersichtlich. Außerdem zeigt Fig. 7A, wie auch die Fig. 6A, die Schraubenfußaufnahme 75 für den Fuß der Befestigungsschraube 50, wobei die Schraubenfußaufnahme 75 in ihrem oberen Abschnitt mit einem Innengewinde versehen ist.

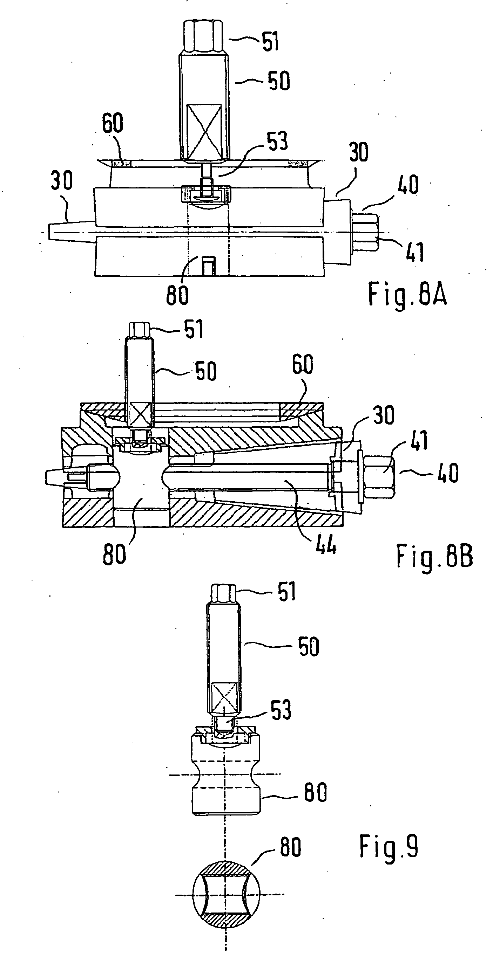

Bei dem in Fig. 8A gezeigten Ausführungsbeispiel des Nivellierfußes in Seitenansicht mit teilweisem Längsschnitt ist die Befestigungsschraube 50 mittels einer unteren Lagerschraube in dem Oberteil über dem Verankerungsteil 80 angebracht und dort in einem deckelartigen Element pendelnd gelagert. Bei dieser Ausführungsform ist eine gelenkig gelagerte Anschraubung vorhanden. Die untere Lagerschraube 53 wird mittels einer Hülsenmutter gehalten. Eine ähnliche Ausführungsform zeigt auch Fig. 8B, wobei ebenfalls eine gelenkig gelagerte Anschraubung vorgesehen ist, und der Ort des Verankerungsteils 80 ist mehr zur niedrigen Seite des Stellkeils 30 verlagert, in einer horizontalen Querrichtung rechtwinklig bezüglich der Nivellierspindel 40 jedoch ebenfalls mittig angeordnet, wo auch die Befestigungsschraube 50 positioniert ist, die in dem Deckelteil des Ankerbolzens pendelnd und mit Spiel nach oben und unten gelagert ist.

Fig. 9 zeigt ein Ausführungsbeispiel, wie die Befestigungsschraube 50 mit einer unteren Lagerschraube 53, die in die untere Stirnseite der Befestigungsschraube 50 mit einem Außengewinde oder auf einen an der unteren Stirnseite der Befestigungsschraube 50 vorstehenden Gewindezapfen mit einem Innengewinde aufschraubbar ist, pendelnd gelagert werden kann. Es ist also ebenfalls eine gelenkig gelagerte Anschraubung gegeben. Auf der Oberseite des Verankerungsteils 80 in Form des Ankerbolzens ist dabei ein deckelförmiges Element aufgeschraubt, so dass eine einfache Zugänglichkeit für die Montage gegeben ist.

Die oben beschriebenen Ausführungsformen, die jeweils mit einem Schrägenausgleich ausgestattet sind, können und werden auch ohne Schrägenausgleich als anschraubbarer Maschinenschuh verwendet, wobei die Kopfplatte stärker ausgebildet wird, damit die Hülse 70 auch in der obersten Nivellierungsebene tiefer als die Oberkante der Kopfplatte liegt. Werden ein oder mehrere Durchgangsbohrungen an der Grund- und Kopfplatte ausgebildet, dann kann dieser Schuh zusätzlich mit dem Boden verschraubt werden. Damit wird ein durchschraubbarer Maschinenschuh erhalten.

Der erfindungsgemäße Nivellierschuh ist immer nivellierbar, auch wenn er an einem Fuß angeschraubt ist.

Durch die in horizontaler Querrichtung des Nivellierfußes mittige Anordnung der Befestigungsschraube 50 wird eine zuverlässige Funktionsweise ohne Verkantung erreicht, wobei die gezeigten Ausgestaltungen auch eine einfache Anbringung mittels der Befestigungsschraube an dem abzustützenden Gegenstand, insbesondere einem Maschinenbett, ergeben.

Der Nivellierschuh wird über die Führungshülse 70 und die Befestigungsschraube 50 vorgespannt, indem der Nivellierschuh an einem Fuß der Maschine angeschraubt wird. Somit wird eine spielfreie Aufstellung erreicht, die das dynamische Verhalten einer auf diesen Nivellierschuhen aufgestellten Maschine sehr positiv beeinflusst.

Der erfindungsgemäße Nivellierschuh kann auch als durchschraubbare Ausführung mit zwei außermittigen Durchgangslöchern ausgebildet sein.

## Patentansprüche

1. Nivellierschuh mit einem an einem Maschinenbett mittels einer Schraubbefestigung anbringbaren Oberteil (20), einem auf einer Unterlage aufsetzbaren Unterteil (10) und einem zwischen diesen zum Ändern ihres Abstandes über Keilflächen horizontal verschieblich gelagerten Stellkeil (30), der mittels einer in ihm drehbar und axial unverstellbar gelagerten Nivellierspindel (40) horizontal vor und zurück verschiebbar ist, welche durch ein einerseits in das Unterteil (10) und andererseits in das Oberteil (20) eingreifendes, gegenüber diesen in Achsrichtung der Nivellierspindel (40) unverschiebliches Verankerungsteil (80) geschraubt ist, wobei die Schraubbefestigung bezüglich der horizontalen Richtung rechtwinklig zur Nivellierspindel (40) mittig auf dem Oberteil (20) angeordnet ist und wobei das Verankerungsteil (80) als Ankerbolzen ausgebildet ist, der mit seiner Achse senkrecht zur Achse der Nivellierspindel (40) ausgerichtet ist,
**dadurch gekennzeichnet,**
**dass** das Verankerungsteil (80) gegenüber dem Unterteil (10) und dem Oberteil (20) in senkrechter Richtung frei verschieblich ist,
**dass** die Schraubbefestigung eine Befestigungsschraube (50) umfasst, die oberhalb des Verankerungsteils (80) gelagert ist,
**dass** das Verankerungsteil (80) in einer koaxialen Führungshülse (70) verschieblich gehalten ist, die auf sich diametral gegenüberliegenden Seiten mit einer jeweiligen Spindeldurchführung (73) versehen ist, welche gegenüber der Nivellierspindel (40) nach oben und unten mindestens über den Verschiebeweg des Verankerungsteils (80) ausgespart ist,
**dass** die Führungshülse (70) mit ihrem oberen Endbereich in dem Oberteil (20) und mit ihrem unteren Endbereich in dem Unterteil (10) gelagert ist, wobei das Oberteil (20) gegenüber dem Unterteil (10) zum Ändern des Abstandes verschiebbar ist, und
**dass** die Führungshülse (70) auf ihrer Oberseite mit einem integrierten oder separaten Hülsendeckel (71') versehen ist, an dem die Befestigungsschraube (50) pendelnd gelagert ist.

2. Nivellierschuh nach Anspruch 1,
**dadurch gekennzeichnet,**
**dass** die Führungshülse (70) an einem Fußabschnitt mittels eines integrierten bundartigen oder separaten Sicherungsrings (72, 72') an dem Unterteil (10) gehalten ist.

3. Nivellierschuh nach einem der vorhergehenden Ansprüche,
**dadurch gekennzeichnet,**
**dass** die Oberseite des Oberteils (20) mit einem Stützabschnitt (21) versehen ist, der die Stelle der Schraubbefestigung ringförmig konzentrisch umgibt und auf seiner Oberseite entsprechend einer Kugelfläche konkav geformt ist, und dass ein Lagerring (60) vorhanden ist, der auf seiner Unterseite zum Bilden einer Gleitlagerung eine an die konkave Kugelfläche des Stützabschnittes (21) angepasste konvexe Kugelfläche aufweist.

4. Nivellierschuh nach einem der vorhergehenden Ansprüche,
**dadurch gekennzeichnet,**
**dass** der Stellkeil (30) zwei parallel zu der Nivellierspindel (40) verlaufende Seitenabschnitte (32), einen diese an der rückseitigen Keilseite verbindenden hohen Quersteg (31) sowie einen diese an der vorderseitigen Keilseite verbindenden niedrigen Quersteg (33) aufweist und
**dass** die Keilflächen zumindest an den Seitenabschnitten (32) ausgebildet sind und mit angepassten Führungsabschnitten (11) mit der Oberseite des Unterteils (10) und mit der Unterseite des Oberteils (20) zum Bilden einer Gleitlagerung zusammenwirken.

5. Nivellierschuh nach Anspruch 4,
**dadurch gekennzeichnet,**
**dass** die Nivellierspindel (40) mit ihrem vorderen Abschnitt in dem niedrigen Quersteg (33) und mit ihrem hinteren Abschnitt in dem hohen Quersteg (31) gelagert ist und an ihrem hinteren Abschnitt mit einem Spindelkopf (41) mit Werkzeugaufnahme zum Drehen der Nivellierspindel (40) versehen ist.

## Claims

1. Levelling shoe having a top part (20) that is attachable to a machine bed by means of a screw fastening, a bottom part (10) which is placeable on a base, and an adjusting wedge (30) mounted in a horizontally displaceable manner between said top part (20) and bottom part (10) in order to change the spacing thereof via wedge surfaces, said adjusting wedge (30) being displaceable horizontally back and forth by means of a levelling spindle (40) mounted therein in a rotatable and axially non-adjustable manner, said levelling spindle (40) being screwed by an anchoring part (80) which engages on one side in the bottom part (10) and on the other side in the top part (20) and is non-displaceable with respect thereto in the axial direction of the levelling spindle (40), wherein the screw fastening is arranged centrally on the top part (20) at right angles to the levelling spindle (40) with respect to the horizontal direction, and wherein the anchoring part (80) is in the form of an anchor bolt which is oriented with its axis perpendicular to the axis of the levelling spindle (40),
**characterized**
**in that** the anchoring part (80) is freely displaceable in a perpendicular direction with respect to the bottom part (10) and the top part (20),
**in that** the screw fastening comprises a fastening screw (50) which is mounted above the anchoring part (80),
**in that** the anchoring part (80) is held in a displaceable manner in a coaxial guide sleeve (70) which is provided on diametrically opposite sides with a respective spindle lead-through (73) which is cut out upwardly and downwardly with respect to the levelling spindle (40) at least over the displacement path of the anchoring part (80),
**in that** the guide sleeve (70) is mounted with its upper end region in the top part (20) and with its lower end region in the bottom part (10), wherein the top part (20) is displaceable with respect to the bottom part (10) in order to change the spacing, and
**in that** the guide sleeve (70) is provided on its top side with an integrated or separate sleeve cover (71'), on which the fastening screw (50) is mounted in a floating manner.

2. Levelling shoe according to Claim 1,
**characterized**
**in that** the guide sleeve (70) is held on the lower part (10) at a foot section by means of an integrated flange-like or separate securing ring (72, 72').

3. Levelling shoe according to either of the preceding claims,
**characterized**
**in that** the top side of the top part (20) is provided with a supporting section (21) which concentrically surrounds the location of the screw fastening in an annular manner and is formed in a concave manner corresponding to a spherical surface on its top side, and that there is provided a bearing ring (60) which has on its underside a convex spherical surface matching the concave spherical surface of the supporting section (21) in order to form a sliding mounting.

4. Levelling shoe according to one of the preceding claims,
**characterized**
**in that** the adjusting wedge (30) has two side sections (32) that extend parallel to the levelling spindle (40), a high crosspiece (31) connecting said side sections (32) on the rear wedge side, and a low crosspiece (33) connecting them on the front wedge side, and
**in that** the wedge surfaces are formed at least on the side sections (32) and interact by way of matching guide sections (11) with the top side of the bottom part (10) and with the bottom side of the top part (20) in order to form a sliding mounting.

5. Levelling shoe according to Claim 4,
**characterized**
**in that** the levelling spindle (40) is mounted by way of its front section in the low crosspiece (33) and by way of its rear section in the high crosspiece (31) and is provided on its rear section with a spindle head (41) having a tool receptacle in order to rotate the levelling spindle (40).

## Revendications

1. Sabot de nivellement avec une partie supérieure (20) pouvant être amenée contre un plateau de machine par le biais d'une fixation vissée, une partie inférieure (10) pouvant être placée sur un support et une cale de réglage (30) disposée de façon à pouvoir coulisser entre lesdites parties dans le plan horizontal pour en modifier la distance par le biais de surfaces de cale, ladite cale pouvant être déplacée vers l'avant et vers l'arrière dans le plan horizontal à l'aide d'un arbre de nivellement (40) pouvant tourner dans ladite cale et disposé de façon à être disposé de façon inamovible dans le plan axial, ledit arbre étant vissé à travers une partie d'ancrage (80) s'engrenant d'une part dans la partie inférieure (10) et d'autre part dans la partie supérieure (20) et ne pouvant pas coulisser par rapport à ces parties dans la direction axiale de l'arbre de nivellement (40), la fixation étant disposée de façon centrée sur la partie supérieure (20) par rapport à la direction horizontale, perpendiculairement à l'arbre de nivellement (40), et la partie d'ancrage (80) prenant la forme d'un boulon d'ancrage réalisé avec son axe perpendiculaire à l'axe de l'arbre de nivellement (40) ;
**caractérisé en ce que** :
la partie d'ancrage (80) peut librement coulisser dans la direction verticale par rapport à la partie inférieure (10) et à la partie supérieure (20) ;
la fixation vissée comprend une vis de fixation (50) disposée au-dessus de la partie d'ancrage (80) ;
la partie d'ancrage (80) est maintenue de façon coulissante dans un fourreau de guidage (70) coaxial pourvu sur les côtés diamétralement opposés d'un passage d'arbre (73) respectif évidé vers le haut et le bas par rapport à l'arbre de nivellement (40) au moins sur toute la trajectoire de déplacement de la partie d'ancrage (80) ;
que le fourreau de guidage (70) est disposé avec sa zone d'extrémité supérieure dans la partie supérieure (20) et avec sa zone d'extrémité inférieure dans la partie inférieure (10), la partie supérieure (20) pouvant être coulissée par rapport à la partie inférieure (10) pour modifier l'écartement ; et
le fourreau de guidage (70) étant pourvu sur son côté supérieur d'un cache-fourreau (71') intégré ou séparé au niveau duquel la vis de fixation (50) est disposée de façon oscillante.

2. Sabot de nivellement selon la revendication 1, **caractérisé en ce que** le fourreau de guidage (70) est maintenu contre la partie inférieure (10) au niveau d'une section de pied à l'aide d'une bague de fixation (72, 72') intégrée de type relié ou séparé.

3. Sabot de nivellement selon l'une quelconque des revendications précédentes, **caractérisé en ce que** :
le côté supérieur de la partie supérieure (20) est pourvu d'une section d'appui (21) entourant de façon concentrique à la façon d'un anneau l'emplacement de la fixation vissée et prenant une forme concave sur son côté supérieur en suivant une surface sphérique ; et
une bague de palier (60) est présente, ladite bague comportant sur son côté inférieur une surface sphérique convexe adaptée à la surface sphérique concave de la section d'appui (21) en vue de former un palier de glissement.

4. Sabot de nivellement selon l'une quelconque des revendications précédentes, **caractérisé en ce que** :
la cale de réglage (30) comporte deux sections latérales (32) s'étendant parallèlement à l'arbre de nivellement (40), un étai transversal (31) haut les reliant au côté arrière ainsi qu'un étai transversal (33) bas les reliant au côté avant ; et
les surfaces de cale sont réalisées au moins au niveau des sections latérales (32) et interagissent avec le côté supérieur de la partie inférieure (10) et avec le côté inférieur de la partie supérieure (20) à l'aide des sections de guidage (11) adaptées en vue de former un palier de glissement.

5. Sabot de nivellement selon la revendication 4, **caractérisé en ce que** l'arbre de nivellement (40) est posé avec sa section avant dans l'étai transversal (33) bas et avec sa section arrière dans l'étai transversal (31) haut et est pourvu au niveau de sa section arrière d'une tête d'arbre (41) dotée d'un logement servant à faire pivoter l'arbre de nivellement (40).
